# EUROPEAN PATENT SPECIFICATION

(11) **EP 4 227 036 B1**
(45) Date of publication and mention of the grant of the patent: **02.04.2025**
(21) Application number: 22155959.4
(22) Date of filing: 09.02.2022
(51) Int. Cl.: B23K 26/06, B22F 10/31, B22F 12/90, B23K 26/342, B23K 26/70

(54) **LASER CALIBRATION SYSTEM FOR, LASER PROCESSING SYSTEM FOR AND METHOD OF AUTOMATIC CALIBRATION OF A LASER PROCESSING SYSTEM USING A NON-INTEGRATED TELECENTRIC OPTICAL DETECTOR WITH LIMITED DEGREES OF FREEDOM**
LASERKALIBIRIERUNGSSYSTEM,LASERBEARBEITUNGSSYSTEM UND VERFAHREN ZUM AUTOMATISCHE KALIBRIERUNG EINES LASERBEARBEITUNGSSYSTEMS UNTER VERWENDUNG EINES NICHT-INTEGRIERTEN TELEZENTRISCHEN OPTISCHEN DETEKTORS MIT BEGRENZTEN FREIHEITSGRADEN
SYSTÈMES D'ÉTALONNAGE ET DE TRAITEMENT LASER, ET MÉTHODE POUR ÉTALONNER AUTOMATIQUEMENT UN SYSTÈME DE TRAITEMENT LASER À L'AIDE D'UN DÉTECTEUR OPTIQUE TÉLÉCENTRIQUE NON INTÉGRÉ À DEGRÉS DE LIBERTÉ LIMITÉS

(43) Date of publication of application: 16.08.2023
(73) Proprietor: Raylase GmbH, 82234 Wessling (DE)
(72) Inventor: Lehmann, Wolfgang, 82110 Germering (DE); Dambacher, Berthold, 82234 Weßling (DE)
(74) Representative: Araujo Edo, Mario

(56) References cited:
- EP-A1- 3 650 206
- CN-U- 214 684 758
- US-A- 5 832 415
- US-A1- 2019 063 991

## Description

### FIELD OF THE INVENTION

The present invention is in the field of laser calibration and relates to a laser calibration device configured for generating calibration executable instructions for calibrating one or more laser processing devices of a laser processing apparatus. The invention further refers to a related laser processing system and to a related calibration method.

### BACKGROUND OF THE INVENTION

In the laser-processing industry, a precise calibration of the laser processing devices used for laser processing is a major requirement for guaranteeing high quality standards. The optical and mechanical tolerances of a laser system lead to deviations between a theoretical targeted laser processing of a workpiece being laser processed and an actual laser process that is implemented by the laser system in the real world. Therefore, such deviations needs to be measured with precision and corrected by means of a corresponding calibration of the optical and mechanical components of the laser system typically, this type of calibrations are performed manually. For example, a standard calibration process may comprise generating a calibration pattern on a calibration plate with a laser processing apparatus and subsequently extracting the calibration plate for measuring the position of each of a plurality of reference markings of the calibration pattern manually, for example using a magnifying roller, outside of the laser processing apparatus.

However, this type of calibration technique has significant time requirements, requires the intervention of a human operator and introduces a large number of potential error sources as well as a significant limitation on measurement accuracy and consequently on calibration accuracy two, which inevitably leads to reduced laser processing precision and quality.

Therefore, there is room for technical improvement in the field of calibration of laser processing apparatuses.

EP 3 650 206 A1 discloses a laser calibration device according to the preamble of claim 1 developed by the present inventors comprising one laser processing apparatus that comprises at least one laser processing device for laser-processing a work material and a laser calibration device with an optical detector structurally integrated within the laser processing apparatus. The laser processing apparatus, in particular the optical detector thereof, is used to calibrate one or more laser devices of the laser processing system in which the optical detector is integrated. Further, according to EP 3 650 206 A1, the laser processing apparatus disclosed therein needs not be specifically configured for generating pattern generation executable instructions that are later taken into account for generating calibration data.

CN 214 684 758 U describes the use of a computer automatic calibration process for a laser marking system.

US 5 832 415 A discloses the use of two spatially separated apparatuses, one apparatus being configured for generating a test pattern, and the other apparatus being configured for evaluating the test pattern, which comprises a video camera movable across the test pattern.

US 2019/063991 A1 discloses the use of a portable detection unit, which, when arranged in a mounted state, is not movable with respect to a base plate thereof.

### SUMMARY OF THE INVENTION

The present invention aims at providing a solution to the previously mentioned disadvantages of the prior art by providing a laser calibration device, a laser processing system and a method allowing for improved calibration accuracy, increased automatisation and increased overall calibration speed. A solution to this problem is provided by a laser calibration device according to claim 1, a laser processing system according to claim 10 and by a method according to claim 12. Preferred embodiments of the invention are defined in the dependent claims.

A first aspect of the invention refers to a laser calibration device according to claim 1, comprising a scanning surface, an optical detector, and a processing unit. The scanning surface is configured for arranging thereon a calibration substrate and may in particular be a flat scanning surface. The scanning surface may in particular be a plane smooth surface, which may for example have quadrangular and or rectangular shape, which allows us to arrange thereon a calibration substrate. The scanning surface may for example be or comprise a glass plate. Thus, the laser calibration device may be configured as a flatbed scanner.

If the scanning surface has a quadrangular shape, one or both sides of the scanning surface may have a length from 100 mm to 1500 mm, preferably from 300 mm to 1000 mm, more preferably from 300 mm to 600 mm. The scanning surface may for example have a size of 300 mm x 300 mm or more, 600 mm x 600 mm or more, or 900 mm x 900 mm or more. The scanning surface may have a rectangular shape with a longer side having a first length, for example a first length within one of the aforementioned length ranges, and a shorter side (shorter than the longer side) having a second length shorter than the first length, for example a second length within said one or within a different one of the aforementioned length ranges.

The optical detector is configured for scanning a calibration substrate arranged on the scanning surface. For example, the scanning surface may be a transparent surface at least in part, such that when a calibration substrate is arranged on the scanning surface, the scanning surface may be arranged between the calibration substrate and the optical detector and the optical detector may be able to scan the calibration substrate through the transparent scanning surface.

The optical detector is movable with respect to the frame structure with not more than two, preferably not more than one, degree(s) of freedom. The movement of the optical detector is restricted with respect to the scanning surface in one direction or dimension if the optical detector is movable with two degrees of freedom. If the optical detector is movable with one degree of freedom, the movement of the optical detector is restricted with respect to the scanning surface in two directions or dimensions.

Notably, "direction" or "dimension" may refer herein to directions or dimensions in any coordinate system, for example in an XY Cartesian coordinate system or in any other coordinate system. For example, if the movement of the optical detector with respect to the scanning surface is described using a Cartesian coordinate system in three dimensions corresponding to three mutually perpendicular directions (cf. x, y and z, or "length", "width" and "height"), the aforesaid not more than two, preferably not more than one, degree of freedom, may correspond, respectively, to not more than two or not more than one corresponding directions. For example, if the optical detector is movable with respect to the scanning surface with two degrees of freedom, the optical detector may be fixed with respect to the scanning surface in the Z direction, which may in particular be perpendicular to the scanning surface, and be movable in the X and Y directions. If the optical detector is movable with respect to the scanning surface with one degree of freedom, the optical detector may be fixed with respect to the scanning surface in two directions and may be movable in only one direction. For instance, the optical detector may be fixed with respect to the scanning surface in the Y and Z directions and be movable only in the X direction, which may in particular be parallel to the scanning surface.

However, "direction" or "dimension" need not refer herein to mutually perpendicular directions or dimensions in a Cartesian coordinate system and may also refer to mutually perpendicular directions in a cylindrical coordinate system, a spherical coordinate system, a polar coordinate system or any other coordinate system. For instance, if the movement of the optical detector with respect to the scanning surface is described using cylindrical coordinates in three dimensions corresponding to a radial distance, an angular coordinate and a height (cf. r, ϕ, z), the aforesaid not more than two, preferably not more than one, degrees of freedom, may correspond, respectively, to not more than two or not more than one corresponding (cylindrical) directions. For example, if the optical detector is movable with respect to the scanning surface with two degrees of freedom, the optical detector may be fixed with respect to the scanning surface in the Z direction (height) and be movable in the radial (r) and angular (ϕ) "directions". If the optical detector is movable with respect to the scanning surface with one degree of freedom, the optical detector may be fixed with respect to the scanning surface in the radial (r) and height (z) directions and be movable only in the angular direction (ϕ). The extension of the above to further coordinate systems is straightforward to the skilled person.

If the movement of the optical detector with respect to the scanning surface is restricted in one given direction, the optical detector is fixed with respect to the scanning surface in this given direction, i.e. the movement of the optical detector has no degree of freedom in this given direction or dimension. This means that the optical detector is fixed or attached with respect to the scanning surface, preferably rigidly attached, in such a way, that a position of the optical detector with respect to the scanning surface is not variable in this direction or dimension. For example, if the optical detector has no degree of freedom, i.e. is restricted, in a direction Y of a Cartesian coordinate system or in the radial direction r of a cylindrical coordinate system, the position of the optical detector with respect to the scanning surface may be described in the corresponding coordinate system having a constant value of the corresponding coordinate, Y for the Cartesian coordinate system and r for the cylindrical coordinate system.

The processing unit of the laser calibration device of the first aspect of the invention is functionally connected to the optical detector. The processing unit may be integrated with the remaining components of the laser calibration device, for example within a housing of the laser calibration device that may also host the optical detector. For example, the processing unit may be an internal CPU of the laser calibration device. However, it is also possible that the processing unit may be non-integrated with the remaining components of the laser calibration device at least in part. The processing unit may hence be an external CPU connected and/or connectable to the remaining components of the laser calibration device, in particular to the optical detector. The processing unit may for example be or comprise or be installed in an external computer configured for operating as a processing unit of the laser calibration device.

The processing unit of the laser calibration device may be configured for generating pattern generation executable instructions which, when executed by a control unit of one or more laser processing devices of a laser processing apparatus, cause the one or more laser processing devices to generate a calibration pattern on a calibration substrate using one or more laser beams deflected by the one or more laser processing devices.

"Laser processing apparatus" may refer herein to any apparatus configured for laser-processing a workpiece, in particular a calibration substrate. A laser processing apparatus may comprise one or more laser processing devices. "Laser processing device" may refer herein to any device configured for operating and/or deflecting a laser beam for laser-processing a workpiece, in particular a calibration substrate. A laser processing apparatus may in particular comprise one or more laser processing devices and a control unit for controlling the one or more laser processing devices for laser-processing one or more workpieces, possibly simultaneously and possibly on a common work field. Each of the one or more laser processing devices may for example be or comprise a "deflection unit" ("Ablenkeinheit") as described in EP 3904946 A1 of the applicant and/or as described in WO 2018/078137 A1 of the applicant. A "laser processing apparatus" may in particular be or comprise an additive manufacturing apparatus.

"Calibration pattern" may refer herein to any kind of optically detectable reference marking that may be generated by laser light on the calibration substrate. For example, a calibration pattern may comprise a plurality of laser-formed calibration markings, which may be for instance cross-shaped calibration markings, and which may be arranged on the calibration substrate with a predefined spatial relationship with respect to each other, for example forming a regular grid.

The calibration substrate may for example be or comprise a calibration plate. A calibration plate may comprise a substrate layer and a laser-sensitive layer arranged on the substrate layer. The substrate layer may comprise a thermally stable material, such that the substrate layer may be insensitive to laser light emitted acting upon the laser-sensitive layer and may be resistant to thermal fluctuations such as deformations. The substrate layer may for example comprise or be of glass, in particular quartz glass. The laser-sensitive layer may have a multi-layer structure and may comprise a first layer and a second layer arranged on the first layer. The second layer may comprise a plastic material and/or an organic material. The first layer may comprise a plastic material, a wax paper and/or an organic material. Laser light incident on the laser-sensitive layer material may remove a part of the materials of the layer-sensitive layer, thereby revealing an underlying layer, which may in particular be the first layer of a multi-layer layer-sensitive layer or the substrate layer. Additionally or alternatively, it is possible to adjust the laser light acting upon the calibration substrate such that it removes parts of the laser-sensitive layer but without completely penetrating through the laser-sensitive layer and/or without reaching the substrate layer underlying the laser-sensitive layer.

The processing unit may be specifically configured for generating the pattern generation executable instructions as instructions executable by a control unit of a laser processing apparatus, for example of an additive manufacturing apparatus, which may comprise one or more laser processing devices, for example a plurality of laser processing devices configured for simultaneously laser-processing a common work field.

According to the invention, the laser processing apparatus is structurally independent from the laser calibration device.

Each of the one or more laser processing devices may be configured for laser processing a work material on a corresponding work field, which may partly or totally correspond to a work field of some or all of the other laser processing devices of the one or more laser processing devices. For this purpose, each of the one or more laser processing devices may comprise at least one laser source configured for generating or transmitting (e.g. from an input optical fibre) laser light, movable mirrors, and corresponding galvanometers for controlling and directing the deflection of laser light in the form of a corresponding laser beam.

The pattern generation executable instructions generated by the processing unit may comprise executable instructions regarding the formation of a calibration pattern, in particular of one or more reference markings thereof. For example, the pattern generation executable instructions may be or comprise executable instructions regarding laser parameters of the laser beams to be used for forming the calibration pattern, such as laser orientation, laser intensity, focus position, laser wavelength and/or spot size but also physical parameters of the calibration pattern to be formed, in particular of one or more reference markings thereof, for example spatial location, spatial orientation, contrast, depth profile, and/or shape. The pattern generation executable instructions may hence be based on the adjustable parameters of the corresponding laser processing device(s).

The pattern generation executable instructions may be based on a virtual image of a calibration pattern to be formed based thereon on a calibration substrate. For example, the pattern generation executable instructions may be based on a number and location of a plurality of reference markings of a calibration pattern to be formed on a calibration substrate.

The processing unit may further be configured for detecting a calibration pattern generated based on the pattern generation executable instructions generated by the processing unit, the calibration pattern being comprised in a calibration substrate scanned by the optical detector. This may in particular mean within the context of the present application that the processing unit may be specifically configured for detecting the calibration pattern that can be generated by one or more laser processing devices of a laser processing apparatus based on pattern generation executable instructions that may have been previously generated by the processing unit itself.

Thus, the processing unit may first generate pattern generation executable instructions and provide them to one or more laser processing devices of a laser processing apparatus. Based on the pattern generation executable instructions generated by the processing unit, said one or more laser processing devices of said laser processing apparatus may generate a calibration pattern on a calibration substrate, which may for example be a calibration plate. Once the calibration pattern has been formed on the calibration substrate, the calibration substrate can be arranged on the scanning surface of the laser calibration device, whereupon the optical detector can scan the calibration pattern and transmit it to the processing unit, which is specifically configured for detecting this type of calibration pattern and capturing the information contained therein relevant for the purpose of the invention.

The processing unit may further be configured for generating calibration executable instructions based on the detected calibration pattern and on the corresponding pattern generation executable instructions. In other words, the processing unit is configured for generating calibration executable instructions taking into account both a calibration pattern detected by the optical detector, i.e. a calibration pattern comprised in a calibration substrate scanned by the optical detector, and the pattern generation executable instructions based on which the detected calibration pattern was generated by a corresponding laser processing apparatus.

When the calibration executable instructions generated by the processing unit are executed by the control unit of the one or more laser processing devices of the laser processing apparatus that was used for generating the calibration pattern based on the pattern generation executable instructions that were originally generated by the processing unit, the calibration executable instructions cause the control unit to calibrate the one or more laser processing devices of said laser processing apparatus, possibly based on a difference between a virtual ideal calibration pattern to be generated based on the pattern generation executable instructions originally generated by the processing unit and the actual calibration pattern detected by the optical detector. Such difference may be based to different fluctuation/deviation factors of the one or more laser processing devices, for example due to thermally driven fluctuations such as offset drift and/or gain drift. The processing unit may for example be configured for generating the calibration executable instructions based on a difference between a plurality of reference markings of the detected calibration pattern, in particular a location and/or orientation thereof, and a plurality of virtual reference markings according to the pattern generation executable instructions, in particular a location and/or orientation thereof.

The laser calibration device of the invention hence allows generating calibration executable instructions for calibrating one or more laser processing devices of a laser processing apparatus with increased automatisation. The generation of the calibration executable instructions by the laser calibration device does in particular not require a large number of manual measurements by a human operator. Instead, the measurements of a calibration pattern required for calibrating the laser processing apparatus can be automatically performed using the laser calibration device of the invention with increased efficiency and accuracy. This applies not only to the calibration of one single laser processing apparatus but also in particular to the calibration of a laser processing system comprising a plurality of laser processing apparatuses to be calibrated.

For example, for a laser processing system comprising 10 laser processing apparatuses, manual calibration of each of the laser processing apparatuses may require an overall time of about 25 hours (2,5 hours per laser processing apparatus) of concentrated and dedicated human operator work. In contrast, the laser calibration device of the invention may allow correctly calibrating 10 laser processing apparatuses in about 100 minutes (10 minutes per laser processing apparatus) of mostly automated work and further providing reduced errors and hence increased measurement and calibration accuracy.

Further, since the calibration data generated by the laser calibration device of the invention can be automatically generated and transferred to the corresponding laser processing apparatus, for example via a corresponding LAN or WLAN connection, there is no media discontinuity. Eventual miscalculations or wrong measurements of a human operator regarding for example the number or position of reference markings of a calibration pattern do not come into play for the laser calibration device of the invention.

The laser calibration device may preferably be free of any laser source and/or of any laser deflection unit. Thus, in contrast to the previously mentioned laser processing apparatus that may be calibrated using the calibration data generated by the laser calibration device, the laser calibration device may itself comprise no laser source and/or no laser deflection unit (e.g. no movable mirrors and/or galvanometers), since the laser calibration device may be a dedicated device specifically configured for processing and/or generating calibration data and maybe functionally and/or structurally separated from other devices, in particular from the laser processing apparatus and other similar apparatuses, that may be configured for laser processing a work material. Since the laser calibration device of the invention may be a device not configured for laser-processing a work material on its own, the laser calibration device needs not incorporate any laser source and/or any laser deflection unit such as XY-movable mirrors, galvanometers and the like. Instead, the laser processing device of the invention may be a dedicated and specialised device specifically configured for generating calibration executable instructions as explained above.

According to the invention, the laser calibration device of the invention is structurally independent from the laser processing apparatus. Thus the laser calibration device may be separated from the laser processing apparatus(es) to which the pattern generation executable instructions are provided and/or which is/are used for generating a calibration pattern based on the pattern generation executable instructions and/or which is calibrated based on the calibration executable instructions generated by the laser calibration device. Thus, the laser calibration device of the invention may have no structural and/or operational connection with the laser processing apparatus other than through corresponding executable instructions and through the connection means usable for transmitting executable instructions from the laser calibration device to the laser processing apparatus, in particular the pattern generation executable instructions. For example, the laser calibration device may have no structural element such as a housing, a frame, a scanning surface or the like, in common with the laser processing apparatus and/or with any other similar laser processing apparatus. In other words, the laser calibration device according to the present invention is a non-integrated laser calibration device. The laser calibration device of the invention may hence be spatially separated from the laser processing apparatus or any similar laser processing apparatus and may be connected thereto only by corresponding communication elements such as a wired or wireless connection, for instance by means of a LAN or Ethernet connection and/or by means of a WLAN connection.

In some embodiments, more than one calibration patterns may be generated on more than one respective calibration substrates. For example, a first calibration pattern for calibrating laser orientations (e.g. XY-settings of each of the one or more laser processing devices of a laser processing apparatus) may be generated on a first calibration substrate and a second calibration pattern for calibrating focus positions (e.g. focal positions or Z-settings of each of the one or more laser processing devices of a laser processing apparatus) may be generated on a second calibration substrate. The optical detector can then scan the first calibration substrate and the second calibration substrate in any appropriate order for calibrating the one or more laser processing devices of the laser processing apparatus.

According to preferred embodiments of the invention, the optical detector may comprise an illuminating device configured for illuminating the scanning surface and/or a calibration substrate arranged on the scanning surface. The illuminating device may be configured for illuminating the scanning surface and/or a calibration substrate arranged on the scanning surface with light in the visible part of the spectrum, in particular within a wavelength range from 300 nm to 800 nm, preferably from 400 nm to 700 nm. The illuminating device may comprise one or more LEDs. In some embodiments, the illuminating device may comprise an array of LEDs, in particular a linear array of LEDs. The illuminating device may hence be configured for illuminating the scanning surface and/or a calibration substrate arranged on the scanning surface such that a calibration pattern comprised in the calibration substrate arranged on the scanning surface can be optically detected by the optical detector, even in the absence of ambient light, for example due to a cover and/or a housing of the laser calibration device. Further, the illuminating device may be configured, additionally or alternatively, for illuminating the scanning surface and/or a calibration substrate arranged on the scanning surface so as to assist an optical detection or measurement by the optical detector.

According to the invention, the optical detector is movable with respect to the scanning surface in one scanning direction parallel to the scanning surface. Thus, a distance between the optical detector and the scanning surface and/or a calibration substrate received on the scanning surface in a direction perpendicular to the scanning surface is fixed, i.e. it does not vary as the optical detector moves in said one scanning direction. Thus, the position of the optical detector is always parallel to the scanning surface and is at a fixed (vertical) distance from the scanning surface.

A constant separation distance between the scanning surface and/or the calibration substrate arranged thereon and the optical detector may be from 1 mm to 50 mm, preferably from 5 mm to 30 mm, more preferably from 10 mm to 25 mm, for example 12 mm or 25 mm. A constant separation distance within the previously mentioned ranged provides clear and sharp calibration pattern detection. The optical detector may have a depth of field of 0,1 mm to 1 mm, preferably of 0,2 mm to 0,8 mm, more preferably of 0,3 mm to 0,7 mm, for example 0,5 mm.

Thus, the optical detector may be telecentrically configured with respect to the scanning surface and/or with respect to a calibration substrate arranged on the scanning surface. Maintaining a constant distance between the optical detector and the scanning surface and/or the calibration substrate arranged thereon contributes to avoiding focusing errors in the optical detection of a calibration pattern and hence increases measurement and calibration accuracy. This configuration of the optical detector achieves an improved tolerance with respect to fluctuations in the position and/or orientation of the calibration substrate with respect to the optical detector, e.g. an improved depth of field about the scanning surface. The optical detector may have a depth of field of at least 500 µm, preferably at least 1000 µm. Since the optical detector may detect light (e.g. illumination light generated by an illumination device of the laser calibration device) reflected at the calibration substrate in a direction perpendicular to the scanning surface, possible errors introduced by deviations in the position and/or orientation of the calibration substrate with respect to the optical detector are not magnified by a relative inclination or a lateral offset of the optical detector with respect to the scanning surface and/or with respect to a calibration substrate arranged on the scanning surface, inasmuch as a separation distance between the optical detector and the scanning surface and/or with respect to a calibration substrate arranged on the scanning surface remains constant.

Again, the concept of "direction" is not limited herein to a particular coordinate system. For a quadrangular scanning surface, for example if a Cartesian coordinate system is used, the scanning direction may be parallel to one of the sides of the quadrangular scanning surface. In a cylindrical coordinate system and for a circular scanning surface, the scanning direction may correspond to an angular or azimuthal direction. Notably, the optical detector may move in the scanning direction forwards or backwards, wherein both movements are referred to herein as movements in the scanning direction.

In preferred embodiments of the invention, the optical detector may extend in a detection direction parallel to the scanning surface, and the detection direction may preferably be perpendicular to the scanning direction in which the optical detector is movable. The optical detector may be configured to detect a calibration pattern throughout at least a part of the extension of the optical detector along the detection direction. An extension of the optical detector in the detection direction, in particular overlapping the scanning surface, may be from 100 mm to 1300 mm, preferably from 300 mm to 1000 mm, more preferably from 300 mm to 600 mm. This "extension of the optical detector in the detection direction" may refer in particular to an extension of an optically sensible portion, part or component of the optical detector suitable for detecting the calibration pattern, although the optical detector as such, for example taking into account a frame structure thereof, may have overall dimensions greater than the aforesaid "extension of the optical detector in the detection direction".

In preferred embodiments, an extension of the optical detector in the detection direction may correspond at least to an extension of the scanning surface in the detection direction or a part thereof. Thus, the optical detector may be configured to scan the entire scanning surface or a portion thereof completely by sweeping once over the scanning surface along a scanning direction perpendicular to the detection direction. For example, if the scanning surface as an extension of 600 mm in a Y direction corresponding to the detection direction of the optical detector, an extension of the optical detector in said detection direction (Y direction) may be from 500 mm to 700 mm, preferably at least 600 mm so as to scan the scanning surface completely when sweeping the scanning surface once in the scanning direction.

According to the invention, the scanning direction corresponds to a direction in which the optical detector is movable (i.e. has a degree of freedom) with respect to the scanning surface. Additionally, the detection direction may correspond to a direction in which the optical detector may not be movable (i.e. have no degree of freedom) with respect to the scanning surface. The scanning surface may hence be scanned, in particular completely, by moving the optical detector in the scanning direction while parts of a calibration pattern aligned in the detection direction are simultaneously detected for each position of the optical detector along the scanning direction. This allows scanning the scanning surface and detecting the calibration pattern with a high degree of accuracy and repeatability without necessarily requiring the intervention or supervision of a human operator. The skilled person will appreciate that if the scanning surface has at least two symmetry axis, for example if the scanning surface is a quadrangular scanning surface, the "scanning direction" and the "detection direction" may be exchanged, modifying if necessary a size of the optical detector and/or a length over which the optical detector may be movable with respect to the scanning surface, such that the scanning surface or the same part thereof can be covered by the optical detector in an equivalent manner (e.g. exchanging the X and Y axes).

For a quadrangular scanning surface, for which the use of a Cartesian coordinate system may be appropriate, the scanning direction (e.g. Y direction) may be parallel to a first one of the sides of the quadrangular scanning surface and the detection direction (e.g. X direction) may be parallel to a second one of the sides of the quadrangular scanning surface, wherein the first one and a second one of the sides of the quadrangular scanning surface are mutually perpendicular. For a circular scanning surface, for which the use of cylindrical coordinates might be appropriate, the scanning direction may correspond to an angular or azimuthal direction and the detection direction may correspond to a radial direction, such that the circular scanning surface may be scanned by rotating the optical detector around a central axis of the circular scanning surface, such that the circular scanning surface is swept by the optical detector as it moves around the central axis, wherein the optical detector extends in the radial direction.

In preferred embodiments of the invention, the optical detector may be movable in the scanning direction within a motion range extending in the scanning direction. This may in particular mean, that when the optical detector moves in the scanning direction from a minimal position to a maximal position, i.e. covering its entire range of motion, the initial and the final positions of the optical detector may be mutually separated in the scanning direction by a distance corresponding to the motion range. This motion range may be from 100 mm to 1500 mm, preferably from 300 mm to 1000 mm, more preferably from 300 mm to 600 mm.

In preferred embodiments, the optical detector may be movable in the scanning direction within a motion range corresponding at least to an extension of the scanning surface in the scanning direction or a part thereof. In other words, the motion range may correspond at least to an extension of the scanning surface and/or of the calibration substrate in the scanning direction. Thus, the optical detector may be configured to scan the entire scanning surface or a portion thereof completely by sweeping once over the scanning surface along a scanning direction perpendicular to the detection direction. For example, if the scanning surface covers a surface of 600 mm x 600m mm, the optical detector may have an extension in the detection direction of 600 mm or more and may be movable in the scanning direction over a motion range of 600 mm or more.

In the case of a circular scanning surface, an extension of the optical detector may correspond to a radius or a diameter of the scanning surface and the motion range (in this case an angular motion range) over which the optical is movable may correspond, respectively, to a whole circumference, i.e. to an angle of 360°, or to a half circumference, i.e. an angle of 180°, such that the scanning surface may be scanned completely by moving or rotating the optical detector throughout the distance or angle over which the optical detector is movable.

According to preferred embodiments of the invention, the optical detector may have an optical resolution of at least 600 dpi, preferably of at least 1200 dpi, more preferably of at least 2400. However, the optical detector may also have a lower resolution, for example a resolution from 150 dpi to 300 dpi. The optical detector may be a monochromatic detector. However, the optical detector may also be a colour detector, like an RGB colour detector.

The optical detector may be configured to scan the calibration substrate with a scanning rate of up to 55 kHz, preferably of 22 kHz to 44 Hz 55 kHz, for example of 44 kHz.

According to preferred embodiments of the invention, the laser calibration device may comprise a guiding structure for guiding a movement of the optical detector, wherein the guiding structure may preferably comprise at least a guiding rail. The guiding structure may guide the movement of the optical detector in directions or dimensions in which the movement of the optical detector with respect to the scanning surface has a degree of freedom, i.e. is not restricted. For example, the guiding structure may be configured for guiding the movement of the optical detector in the scanning direction. In some embodiments, the guiding structure may comprise at least a guiding rail, in particular one or two guiding rails, extending in the scanning direction. The guiding structure may allow guiding the movement of the optical detector with respect to the scanning surface with a high degree of precision and reproducibility and guaranteeing a restriction of the movement of the optical detector in directions or dimensions in which the movement of the optical detector with respect to the scanning surface does not have any degree of freedom, i.e. is restricted.

In some embodiments, for example in embodiments in which the scanning surface has a quadrangular shape, the guiding structure may comprise a first guiding rail extending in the scanning direction along one side of the scanning surface and a second guiding rail extending in the scanning direction along another side of the scanning surface opposite and parallel to the aforesaid one side of the scanning surface, such that the optical detector may be moved in the scanning direction guided by the guiding structure, wherein a first end of the optical detector moves attached to the first guiding rail and a second end of the optical detector moves attached to the second guiding rail.

In preferred embodiments of the invention, the laser calibration device may further comprise a guide control unit for controlling the movement of the optical detector, wherein the guide control unit may be configured for moving the optical detector with a scanning speed between 10 and 2000 mm/s, preferably between 100 and 1000 mm/s, more preferably between 200 and 800 mm/s. The guide control unit may allow moving the optical detector across the scanning surface rapidly and with a high degree of accuracy and automatisation. The guide control unit may be configured for controlling the movement of the optical detector with a positioning accuracy for the optical detector of 5 µm or less, preferably of 2 µm or less, more preferably of 1 µm or less.

According to preferred embodiments, the optical detector may be or comprise a contact image sensor (CIS).

In preferred embodiments of the invention, the optical detector may comprise a plurality of optical detection units, possibly arranged linearly along the same direction, in particular along the detection direction. Each of the optical detection units comprise one or more focusing lenses or lens arrays, in particular one or more rod lenses or rod lens arrays, and an optical detection sensor (pixel).

The plurality of optical detection units may in particular comprise from 7.000 to 30.000 optical detection units (and a corresponding plurality of optical detection sensors). Each of the optical detection sensors (pixels) may cover a distance along the detection direction of 14 µm to 44µm, preferably 20 µm to 43 µm, for example 21 µm or 42 µm For example, an optical detector having an extension of 617 mm in the detection direction may comprise 14.592 optical detection sensors (pixels) linearly arranged along the detection direction, wherein each of the detection diodes may cover a distance along the detection direction of for example 42 µm for a maximal detection resolution of 600 dpi.

Each individual optical detection unit may be configured for capturing a corresponding region of a calibration pattern on a surface of the calibration substrate facing the scanning surface. Thanks to the number and arrangement of the optical detection units, an overlap between the portions captured by different optical detection units may be negligible or very small, such that a clear and sharp combined image can be produced along the detection in which the optical detection units are aligned, e.g. the detection direction.

The laser calibration device according to the invention allows achieving an improved calibration accuracy, in particular as compared to conventional calibration processes totally or partly relying on manual calibration. When relying on manual calibration, a typical measurement accuracy of ±50 µm may be expected, whereas the laser calibration device of the invention may provide a measurement accuracy, in particular with respect to the measurement of a calibration pattern, of ±4 µm with a standard deviation of 2 µm. Therefore, a laser calibration device according to the invention may allow a laser processing apparatus to achieve an average process field correction accuracy of 45 µm or less, preferably 15 µm or less, while the previously mentioned manual calibration processes may typically reach an average process field correction accuracy of 100 µm or more. This means that, once calibrated according to the present invention, the laser processing devices of a laser processing apparatus could form a new calibration pattern on a new calibration substrate with an accuracy of 45 µm or less, preferably 15 µm or less. Thus, if the new calibration substrate is used for a new calibration of the laser processing devices according to the present invention, the positional corrections upon the laser processing devices may on average not exceed an absolute value of 45 µm or less, preferably 15 µm or less,

The linear configuration of the optical detector of the laser calibration device of the invention, in particular an extension of the optical detector in the detection direction and the limited mobility (limited degrees of freedom) of the optical detector with respect to the scanning surface allows detecting pixels of a calibration patterns always telecentrically, without being subject to perspective distortion. Irrespectively of a position of a calibration pattern or a part thereof on a calibration substrate, for example irrespectively of the position of a particular reference marking of the calibration pattern, said part of the calibration pattern can be detected by a diode or a similar optical detection unit of the optical detector momentarily arranged directly below said part of the calibration pattern, such that its precise location can be detected by the optical detector with high accuracy.

In some embodiments, for example when the optical detector is configured as a CIS, the optical detector may comprise a plurality of optical detection units arranged linearly along one direction, in particular along the detection direction, and each of the optical detection units may comprise or be associated to one or more focusing lenses for focusing measuring light received from the scanning surface and/or from a surface of the calibration substrate facing the scanning substrate upon an optical sensor of the corresponding optical detection unit. Each of the one or more lenses may be or comprise a rod lens or a rod lens array. The image detection quality may then be influenced by the mounting accuracy and homogeneity of the focusing lenses of each of the optical detection units. In order to compensate for this possible source of inaccuracy, the processing unit of the laser calibration device according to the invention may be configured, in some embodiments, to implement a basic calibration, wherein the basic calibration can be performed as explained below.

While each of the different advantageous features of the invention described above with respect to different embodiments of the invention may individually contribute to achieving increased calibration accuracy, a combination of a number of these advantageous features may contribute to enhance the calibration accuracy even further.

A second aspect of the invention refers to a laser processing system according to claim 10, comprising one or more laser processing apparatuses and a laser calibration device. Each of the one or more laser processing apparatuses may comprise one or more respective laser processing devices for laser processing a work material. For this purpose, each of the one or more laser processing devices may comprise at least one laser source configured for generating or transmitting (e.g. from an input optical fiber) laser light and movable mirrors and corresponding galvanometers for controlling and directing the deflection of laser light in the form of a corresponding laser beam. Each of the one or more laser processing devices of a laser processing apparatuses may be configured for laser processing a work material on a corresponding work field, wherein the work fields of the one or more laser processing devices of a laser processing apparatus may partly or totally overlap forming a common work field. In other words, the one or more laser processing devices of each laser processing apparatus may be configured for laser-processing a work material on a common work field, preferably simultaneously. The previously provided definitions of "laser processing apparatus" and of "laser processing device" apply.

Each laser processing apparatus may in particular comprise one or more laser processing devices and a control unit for controlling the one or more laser processing devices for laser-processing one or more workpieces, possibly simultaneously and possibly on a common work field. Each of the one or more laser processing devices may for example be or comprise a "deflection unit" ("Ablenkeinheit") as described in EP 3904946 A1 and/or as described in WO 2018/078137 A1 of the applicant. Each laser processing apparatus may in particular be or comprise an additive manufacturing apparatus.

The laser calibration device, which may be configured according to any of the embodiments of the first aspect of the invention described above, is operatively connected to each of the one or more laser processing apparatuses, in particular to a respective control unit configured for controlling the corresponding one or more laser processing devices, in particular via corresponding wired communication elements, such as a LAN or Ethernet connection and/or wireless communication elements, such as a respective WLAN connection.

The processing unit of the laser calibration device of the laser processing system according to the second aspect of the invention is configured for generating pattern generation executable instructions such that, when executed by a control unit of the one or more laser processing devices of a given one of the one or more laser processing apparatuses, the pattern generation executable instructions cause the one or more laser processing devices of said given one of the one or more laser processing apparatuses to generate a calibration pattern on a calibration substrate.

The processing unit of the laser calibration device of the laser processing system according to the second aspect of the invention is further configured for providing said pattern generation executable instructions to said control unit of the one or more laser processing devices of said given one of the one or more laser processing apparatuses.

The one or more laser processing apparatuses, in particular the respective one or more respective laser processing devices, are configured to receive the corresponding pattern generation executable instructions from the laser calibration device, in particular by a corresponding control unit, and to generate a calibration pattern on a calibration substrate based on the respective pattern generation executable instructions. For that purpose, the calibration substrate, which may for example be a calibration plate, maybe arranged on the corresponding work field of the one or more laser processing devices of the corresponding laser processing apparatus, in particular on the common work field. The calibration pattern may then be generated on the calibration substrate by laser-processing (e.g. laser-marking) the calibration substrate with the corresponding calibration pattern, which may in particular comprise a plurality of reference markings. For example, the position, number and/or orientation of said reference markings may be pre-determined by the pattern generation executable instructions.

The pattern generation executable instructions may comprise corresponding pattern generation data which, when used by the control unit of the corresponding laser processing apparatus, cause the one or more laser processing devices, in particular laser deflection elements thereof such as movable mirrors, fixed and/or movable optical lenses, preferably comprising a focusing unit, galvanometers and the like, to move and orient as required for forming the corresponding calibration pattern on a calibration substrate, in particular a calibration plate, arranged on the work field of the laser processing apparatus.

The processing unit of the laser calibration device of the laser processing system according to the second aspect of the invention may further be configured for detecting the calibration pattern generated by the one or more laser processing devices of said given one of the one or more laser processing apparatuses based on said pattern generation executable instructions, the calibration pattern being comprised in a calibration substrate scanned by the optical detector of the laser calibration device. Once the one or more laser processing devices have generated a calibration pattern on a calibration substrate based on the corresponding pattern generation executable instructions, the calibration substrate can be extracted from the work field of the corresponding laser processing apparatus and be arranged on the scanning surface of the laser calibration device for being scanned by the optical detector of the laser calibration device, for example by a correspondingly programmed robot or by a human operator.

The processing unit of the laser calibration device of the laser processing system according to the second aspect of the invention is further configured for, based on the detected calibration pattern and on said pattern generation executable instructions provided to the control unit of the one or more laser processing devices of said given one of the one or more laser processing apparatuses, generating calibration executable instructions which, when executed by the control unit of the one or more laser processing devices of said given one of the one or more laser processing apparatuses, calibrate the one or more laser processing devices of said given one of the one or more laser processing apparatuses. The processing unit is further configured for providing said calibration executable instructions to the control unit of the one or more laser processing devices of said given one of the one or more laser processing apparatuses.

Thus, for each of the one or more laser processing apparatuses, corresponding pattern generation executable instructions can be generated and used for creating a corresponding calibration pattern on a corresponding calibration substrate. The calibration substrate can then be scanned by the optical detector of the laser calibration device, such that the corresponding calibration pattern and the corresponding pattern generation executable instructions, which after the optical detector has scanned the calibration pattern formed in the corresponding calibration substrate are both known to the laser calibration device, in particular to the processing unit thereof, are used for generating the corresponding calibration executable instructions. Once generated, the calibration executable instructions can be provided to the corresponding laser processing apparatus, in particular to the respective control unit, and used for calibrating the one or more laser processing devices thereof. Thereby, one different calibration substrate may be used for each of the one or more laser processing apparatuses to be calibrated, for example one different calibration plate per laser processing apparatus.

For each laser processing apparatus, the entire calibration process comprising generating pattern generation executable instructions and using them for generating a corresponding calibration pattern on a corresponding calibration substrate, scanning the corresponding calibration substrate by the laser calibration device to detect the corresponding calibration pattern, generating the corresponding calibration executable instructions and using them for calibrating the corresponding laser processing apparatus, can be carried out with high precision and efficiency, without requiring continued intervention of a human operator, and in a relatively moderate time, for example in 10 minutes or less. For a plurality of laser processing apparatuses, the process can be carried out sequentially for calibrating each of the laser processing apparatuses.

Accordingly, a control unit of the one or more laser processing devices of each of the one or more laser processing apparatuses may be configured for calibrating the corresponding one or more laser processing devices based on calibration executable instructions generated by and/or received from the laser calibration device. The calibration executable instructions may comprise corresponding calibration data which, when used by the control unit, cause the one or more laser processing devices, in particular laser deflection elements thereof such as movable mirrors, fixed and/or movable optical lenses, preferably comprising a focusing unit, galvanometers and the like, to adjust as required. The calibration executable instructions may for example comprise correction data implementable by the respective control unit to correct/calibrate positional, orientational and/or focussing settings of each of the one or more respective laser processing devices.

The laser calibration device of the laser processing system according to the second aspect of the invention may in particular be structurally independent, in particular from each of the one or more laser processing apparatuses. Thus, the laser calibration device and each of the one or more laser processing apparatuses to be calibrated may be different devices independent from each other, possibly having no structural element in common. This may in particular imply that it may be possible to change the location of the laser calibration device without necessarily changing a location of the one or more laser processing apparatuses.

In preferred embodiments of the invention, each of the one or more laser processing apparatuses may be an additive manufacturing apparatus.

A third aspect of the invention refers to a method according to claim 12 of calibrating one or more laser processing devices of one or more laser processing apparatuses using a laser calibration device according to any of the embodiments of the first aspect of the invention described above. The method may in particular be or comprise a computer implemented method. The one or more laser processing devices to be calibrated by the method may belong to the same or the respective laser processing systems, in particular to a laser processing system according to any of the embodiments of the second aspect of the invention described above.

The method according to the third aspect of the invention comprises generating, by the laser calibration device, pattern generation executable instructions and providing said pattern generation executable instructions to the one or more laser processing devices of each of the one or more laser processing apparatuses, in particular to a corresponding control unit thereof. The pattern generation executable instructions may be the same (identical) or difference for each of the laser processing apparatuses. In particular, if all of the one or more laser processing apparatuses and/or of the corresponding calibration substrates are identical, the pattern generation executable instructions may be the same for all laser processing apparatus.

The method further comprises generating, by the one or more laser processing devices of each of the one or more laser processing apparatuses, a respective calibration pattern on a corresponding calibration substrate based on the respective pattern generation executable instructions provided by the laser calibration device.

The method may comprise, before generating the respective calibration pattern, arranging a calibration substrate on a work field of the corresponding laser processing apparatus.

The method may comprise, after generating the respective calibration pattern, removing the calibration substrate from the work field of the corresponding laser processing apparatus and arranging the calibration substrate, containing the corresponding calibration pattern, on the scanning surface of the laser calibration device.

The method further comprises, for each of the one or more laser processing apparatuses, scanning the corresponding calibration pattern using the laser calibration device, and generating calibration data based on the scanned calibration pattern and on the corresponding pattern generation executable instructions and providing the generated calibration data to a corresponding one of the one or more laser processing apparatuses. Even in cases in which the same pattern generation executable instructions may be used for each of the laser processing apparatuses, the calibration pattern generated by each of the laser processing apparatus may be expected to be different, due to different variations from the ideal initially targeted calibration pattern in each of the laser processing apparatuses. Accordingly, the calibration data generated by the laser calibration device for each of the laser processing apparatuses may be different, even in those cases in which the same pattern generation executable instructions may be originally used for all of the one or more laser processing apparatuses.

The method further comprises calibrating the one or more laser processing devices of each of the one or more laser processing apparatuses based on the respective calibration data received from the laser calibration device. Thus, the calibration data received from the laser calibration device, which may in particular comprise information resulting from a comparison of the actual calibration pattern scanned by the optical detector and the virtual calibration pattern that was aimed at by the pattern generation executable instructions that were used for generating the actual calibration pattern, can be used for calibrating the corresponding laser processing devices, thereby correcting the necessary mechanical, optical, electronic or and/or laser parameters for the corresponding laser processing apparatus to be correctly calibrated. As a result of the calibration process, which may run at least mostly or even entirely automatically, the one or more laser processing apparatus as can be correctly calibrated and prepared for laser processing a workpiece with increased laser accuracy.

If the one or more laser processing devices of a given laser processing apparatus that has already been calibrated according to the method of the third aspect of the invention were used for creating again the same calibration pattern based on the same pattern generation executable instructions, the results would reveal that the actual calibration pattern generated on the corresponding calibration substrate would correspond to or at least much better resemble the virtual calibration pattern that was originally aimed at by the pattern generation executable instructions. This is a result of the corresponding laser processing devices having been correctly calibrated.

The previously described steps of the method according to the third aspect of the invention may be sequentially implemented for each of the laser processing apparatuses to be calibrated, such that a first laser processing apparatuses is calibrated first, then a second laser processing apparatus, and so on until all laser processing apparatuses are calibrated. However, it is also possible to calibrate each of the one or more laser processing apparatuses in parallel, such that the pattern generation executable instructions are generated for each of the one or more laser processing apparatuses first, then a respective calibration pattern is generated on a corresponding calibration substrate by each of the one or more laser processing apparatuses, then each of the calibration substrates is sequentially scanned by the laser calibration device, and finally, each of the one or more laser processing apparatuses is calibrated.

During the execution of the method according to the third aspect of the invention, it may be necessary to transport the calibration substrate from each of the one or more laser processing apparatuses, in particular from a work field thereof, to the laser calibration device. This may be carried out by a human operator. However, it is also possible to fully automatize the method according to the third aspect of the invention, for example by using a robot for this purpose.

In preferred embodiments of the invention, generating the pattern generation executable instructions may comprise determining a number, a shape, an intensity, a contrast, an orientation, and/or spatial position of a plurality of reference markings. The plurality of reference markings may preferably comprise a grid of 25 to 2401 reference markings. The reference markings may be arranged forming a regular grid. For example, the reference markings of a grid comprising 2401 reference markings overall may be arranged in a regular 49×49 square grid. However, reference markings corresponding to different laser processing devices of one laser processing apparatus may be interleaved, thereby deviating from a regular arrangement. The use of a laser calibration device according to the present invention allows working with an increased number of reference markings, thereby providing improved calibration homogeneity, in particular as compared to a manual calibration, for which typically not more than 5 x 5 or 11 x 11 reference markings may be feasibly used.

Generating the respective calibration pattern on a corresponding calibration substrate may comprise laser marking the plurality of reference markings on the calibration substrate according to the generated pattern generation executable instructions. Scanning the corresponding calibration pattern using the laser calibration device may then comprise scanning the plurality of reference markings. The calibration executable instructions may be generated based on the scanned plurality of reference markings and on the corresponding pattern generation executable instructions, preferably based on a difference between a shape, an intensity, a contrast, an orientation and/or a spatial position of the scanned plurality of reference markings as compared to the (virtual) plurality of reference markings determined according to the pattern generation executable instructions.

In some embodiments, generating said respective calibration pattern on the corresponding calibration substrate based on the respective pattern generation executable instructions provided by the laser calibration device may comprise including in the calibration pattern an identification marking, which may for example be or comprise a QR-code, identifying a laser processing apparatus used for generating said respective calibration pattern and/or the respective pattern generation executable instructions used for generating said respective calibration pattern. It may then be possible for the laser calibration device to identify the laser processing apparatus used for generating said respective calibration pattern and/or the respective pattern generation executable instructions used for generating said respective calibration pattern based on the identification marking, which may be detected and read by the laser calibration device.

Additionally or alternatively, generating said respective calibration pattern on the corresponding calibration substrate based on the respective pattern generation executable instructions provided by the laser calibration device may comprise including in the calibration pattern a plurality of substrate orientation markings identifying an orientation of the calibration substrate with respect to the laser processing apparatus used for generating said respective calibration pattern. The orientation markings may allow the laser calibration device to recognize an orientation of the calibration pattern irrespectively of an orientation of the calibration substrate on the scanning surface. As a consequence, the process of calibrating a laser processing apparatus using the laser calibration of the invention may be independent from an orientation of the calibration substrate on the scanning surface, which may effectively save a significant amount of time, in particular when calibrating a plurality of laser processing apparatuses, since the process of arranging the calibration substrate on the scanning surface needs not be carried out with orientational precision, in particular by a human operator.

In preferred embodiments, calibrating the one or more laser processing devices of each of the one or more laser processing apparatuses may comprise adjusting one or more of: a focus position, a laser field position, a laser field orientation, and/or a laser field size of the one or more laser processing devices of each of the one or more laser processing apparatuses.

In preferred embodiments, calibrating the one or more laser processing devices of each of the one or more laser processing apparatuses may comprise calibrating the one or more laser processing devices of each of the one or more laser processing apparatuses with respect to each other.

According to preferred embodiments, the method of the third aspect of the invention may further comprise performing a basic calibration before the step of scanning the corresponding calibration pattern for each of the one or more laser processing apparatuses. The basic calibration may be carried out at a constant ambient temperature, for example at a controlled ambient temperature of 20°C. The basic calibration may comprise scanning, in particular by the laser calibration device, more particularly by the optical detector thereof, a basic calibration pattern one or more times and calibrating the laser calibration device based on the basic calibration pattern. The basic calibration pattern may be formed on a high precision calibration substrate having a positional accuracy, in particular with respect to each of a plurality of basic calibration marks of the basic calibration pattern, of 10 µm or less, preferably 5 µm or less, more preferably 3 µm or less or 2 µm or less or even 1 µm or less. The high precision calibration substrate may be a glass substrate, in particular made of or comprising float glass. The high precision calibration substrate may for example comprise 4000 or more basic calibration marks. The basic calibration may allow the optical detector of the invention to achieve a high measurement accuracy, in particular with respect to the subsequent measurement of one or more calibration patterns, for example of 1 µm to 10 µm, preferably of 2 µm to 8 µm, more preferably of 3 µm to 5 µm, for example of 4 µm.

A size of the high precision calibration substrate may be smaller than or equal to a size of the scanning surface of the laser calibration device. For example, for a scanning surface with an area of 600 mm x 600 mm, a high precision calibration substrate with an area of 600 mm x 600 mm may be used, but it is also possible to use a high precision calibration substrate with an area of for example 350 mm x 350 mm or less. If the size of the high precision calibration substrate is smaller than the size of the scanning surface, the high precision calibration substrate may be arranged at different positions on the scanning surface during the basic calibration, in particular until a maximal calibration precision is achieved and can no longer be improved by further modifying a position of the high precision calibration substrate on the scanning surface.

Performing the basic calibration of the laser calibration device may allow achieving a high degree of accuracy for subsequently calibrating the one or more laser processing apparatuses using the laser calibration device.

### BRIEF DESCRIPTION OF THE DRAWINGS

- Fig. 1: shows a schematic view of a laser processing system according to the invention.
- Fig. 2: shows a schematic side view of a laser calibration device according to the invention, which can be included in the laser processing system of Fig. 1.
- Fig. 3: shows a schematic front view of a calibration substrate, which can correspond to the calibration substrate of Fig. 2.
- Fig. 4: shows a schematic top view of the laser calibration device of Fig. 2.
- Fig. 5: shows a flow diagram of a method according to the invention of calibrating one or more laser processing devices of one or more laser processing apparatuses using a laser calibration device, which can correspond to the laser calibration device of Fig. 2.

### DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

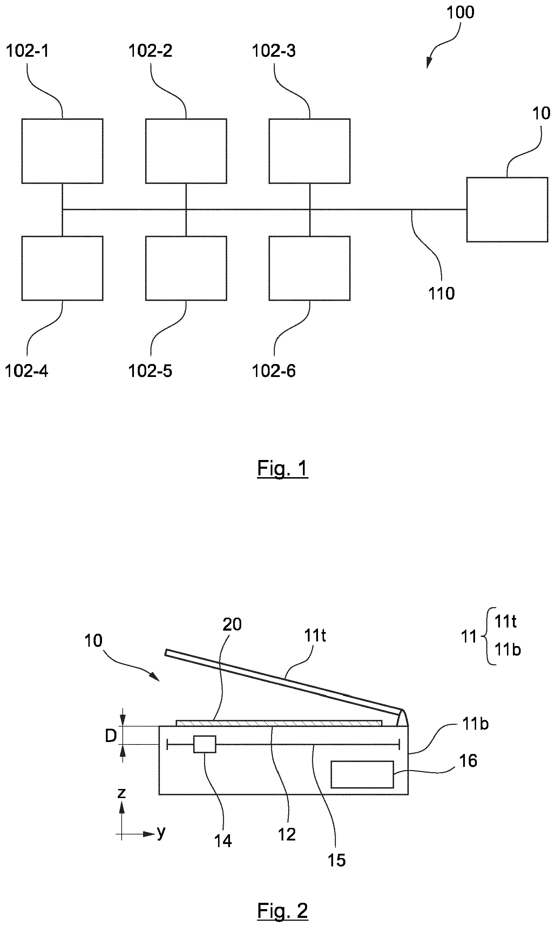

Fig. 1 shows a schematic view of a laser processing system 100 according to an embodiment of the invention. The laser processing system 100 may be arranged in a climatized room under controlled temperature conditions. The laser processing system 100 comprises a plurality of laser processing apparatuses 102-1,..., 102-6. Although six laser processing apparatuses are exemplary shown and described for the laser processing system 100, the number of laser processing apparatuses may be greater or smaller in other related laser processing systems according to the invention. For example, a laser processing system similar to laser processing system 100 can comprise one single laser processing apparatus, two laser processing apparatuses, or ten laser processing apparatuses in other related embodiments.

Each of the laser processing apparatuses 102-1,..., 102-6 is operatively connected to an independent laser calibration device 10 via a connection 110. The connection 110 can for example be a wireless connection, such as a WLAN connection, or a wired connection, such as a LAN or Ethernet connection.

Each of the laser processing apparatuses 102-1,..., 102-6 comprises one or more respective laser processing devices (not shown) configured for laser processing a work material on a corresponding work field. The one or more laser processing devices of each given laser processing apparatus can be configured for simultaneously laser processing a work material on a common work field. Each of the one or more laser processing devices can for example be or comprise a deflection unit as described in EP 390 4946 A1 and/or as described in W0 2018/078137 A1. Each of the laser processing apparatuses 102-1,..., 102-6 can be or comprise an additive manufacturing apparatus.

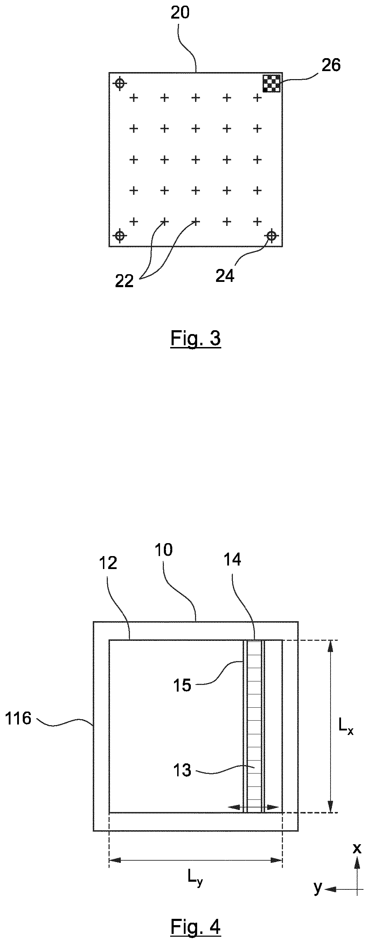

Fig. 2 shows a schematic side view of the laser calibration device 10 shown in Fig. 1. The laser calibration device 10 comprises a flat and transparent scanning surface 12 configured for arranging thereon a calibration substrate 20. In the exemplary embodiment shown in Fig. 2, the calibration substrate 20 is a calibration plate comprising a laser sensitive layer arranged on a substrate layer. Fig. 3 shows a schematic top view of the calibration plate 20.

The laser calibration device 10 further comprises an optical detector 14 configured for scanning the calibration substrate 20 arranged on the scanning surface 12. The optical detector 14, which is configured as a CIS detector, is movable with respect to the scanning surface 12 with limited degrees of freedom. In the exemplary embodiment shown in Fig. 2, the optical detector 14 is movable with respect to the scanning surface 12 in one dimension only, i.e. with only one degree of freedom. In particular, the optical detector 14 is movable in the Y-direction with respect to the scanning surface 12 along a pair of opposite guiding rails 15, while a position of the optical detector 14 is fixed in the Z-direction and in the X-direction. Notably, in related embodiments, the optical detector 14 may be movable in the Y-direction with respect to the scanning surface 12 along one single guiding rail, for example a guiding rail extending along a central axis of the laser calibration device, while a position of the optical detector 14 is fixed in the Z-direction and in the X-direction. Thus, the laser calibration device 10 is configured as a flatbed scanner.

As shown in Fig. 2, the laser calibration device 10 comprises a housing 11 that includes a top part 11t and a bottom part 11b. The top part 11t is movable, in particular pivotable, with respect to the bottom part 11b to cover and uncover the calibration substrate 20 and/or the scanning surface 12. The top part 11t of the housing 11 can be lifted to arrange the calibration substrate 20 on the scanning surface 12 and for removing the calibration substrate 20 from the scanning surface 12 and can be closed to cover the scanning surface 12 and the calibration substrate 20 during the operation of the optical detector 14.

Fig. 4 shows a schematic top view of the laser calibration device 10 of Fig. 2, wherein the calibration substrate 20, which is separately shown in Fig. 3, has been removed for illustration purposes. As seen in Fig. 4, the scanning surface 12 has a quadrangular shape with an extension L_{X} in the X direction and an extension L_{Y} in the Y direction. For example, the scanning surface 12 can be a square surface having dimensions L_{X} = L_{Y} = 300 mm, L_{X} = L_{Y} = 600 mm or L_{X} = L_{Y} = 900 mm. As a further example, the scanning surface 12 can be a rectangular surface having dimensions L_{X} = 300 mm and L_{Y} = 400 mm, L_{X} = 600 mm and L_{Y} = 800 mm or L_{X} = 800 mm and Ly = 950 mm. The optical detector 14 extends in the detection direction X over the entire extension L_{X} of the scanning surface 12 and is movable in the scanning direction Y over the entire extension L_{Y} of the scanning surface 12 or over a part thereof. Therefore, the optical detector 14 can completely scan the scanning surface 12 by sweeping once in the scanning direction Y over the scanning surface 12. Having L_{Y} > L_{X} can ease the task of arranging the calibration substrate 20 on the scanning surface 12.

The optical detector 14 comprises a plurality of optical detection units 13 that are arranged linearly along the detection direction X in a row. The number of optical detection units in the optical detector is reduced in Fig. 4 for illustration purposes, but can be greater in embodiments of the invention. For example, the optical detector can comprise 14.592 optical detection units linearly arranged in the X direction, with each optical detection unit comprising a corresponding optical detection sensor (pixel) covering a distance long the X direction of 42 µm for a detection resolution of 600 dpi. Each of the optical detection units comprises one or more focusing lenses or lens arrays, for example a focusing rod lens, for focusing detection light upon the corresponding optical detection sensor. Further, the optical detector 14 comprises an illumination device 15 configured for illuminating the scanning surface 12 with visible light during the operation of the optical detector 14 for detecting a calibration pattern comprised in a calibration substrate 20 arranged on the scanning surface 12. The illumination device 15 can for example comprise a plurality of illumination LEDs aligned along the direction X. A vertical distance D between the optical detector 14 and the calibration substrate 20 can for example be 12 mm, as indicated in Fig. 2. In related embodiments, the optical detector 14 can however have higher resolution, for example a resolution of 2400 dpi.

The laser calibration device 10 further comprises a processing unit 16. In the embodiment shown in Fig. 2, the processing unit 16 is an integrated processing unit 16 received within the housing 11. However, in other related embodiments, the processing unit 16 may be a non-integrated processing unit that can be partly or totally arranged outside of the housing 11, for example installed in an external CPU (e.g. laptop or PC), and functionally connected with the optical detector 14 by a corresponding connection.

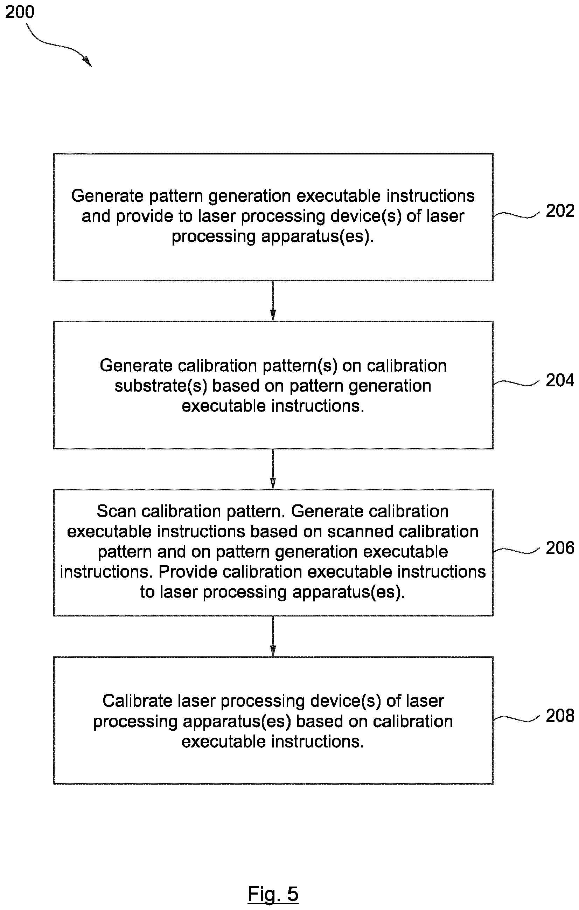

The processing unit 16 is configured for carrying out a method 200 of calibrating the laser processing devices 102-1,..., 102-6 of the laser processing system 100 of Fig. 1 using the laser calibration device 10. The method 200 is schematically illustrated in the flow diagram of Fig. 5.

In step 202, the processing unit 16 generates pattern generation executable instructions and sends them to a control unit of each of the laser processing apparatuses 102-1 to 102-6, which is configured for controlling the corresponding laser processing devices. The pattern generation executable instructions contain laser settings and optical settings that instruct the laser processing devices of the laser processing apparatuses 102-12 100 to-6 to perform laser operations on the corresponding work field in order to generate a corresponding calibration pattern.

In step 204, the laser processing devices of each of the laser processing apparatuses 102-1 to 102-6 generate a respective calibration pattern on a respective calibration substrate arranged in the corresponding work field based on the pattern generation executable instructions received from the laser calibration device 10. This can for example comprise laser-marking a plurality of reference markings 22 on the calibration substrate 20, like the reference markings 22 shown in Fig. 3, and possibly also an identification marking 26 and a plurality of substrate orientation markings 24.

In the exemplary calibration plate 20 shown in Fig. 3, the calibration pattern comprises a regular square grid of 5×5 reference markings, three substrate orientation markings 24 arranged at first to third respective corners of the calibration plate 20 and an identification marking 26, which is configured as a QR code in the exemplary embodiment shown in Fig. 3, arranged on a fourth corner of the calibration plate 20, with the three substrate orientation markings 24 and the identification marking 26 surrounding the plurality of reference markings 22. In other related embodiments, the number of reference markings may be different, in particular greater. For example, the calibration plate 20 can comprise 49 × 49 reference markings arranged in a regular grid.

In other examples, if one laser processing apparatus comprises a plurality of laser processing devices, the calibration pattern generated on the calibration substrate 20 can comprise a corresponding plurality interleaved groups of reference markings forming respective regular grids, with each group of reference markings corresponding to one of the laser processing devices. For example, if a laser processing apparatus comprises two laser processing devices configured for laser processing a common work field, the calibration pattern for the two laser processing apparatuses may comprise two interleaved regular square grids of reference markings, each grid corresponding to one of the laser processing devices. The increased calibration accuracy achieved according to the present invention makes it possible to simultaneously calibrate a plurality of laser processing devices with partly or totally overlapping working fields (multi-field calibration).

After step 204, the calibration substrate 20 is removed from the corresponding laser processing apparatus 102-1,..., 102-6 and arranged on the scanning surface 12 of the laser calibration device 10 with a surface of the calibration substrate 20 on which the calibration pattern is formed facing the scanning surface 12.

Then, in step 206, possibly upon receiving a "start measurement" instruction by a user, the optical detector 14 scans the calibration pattern comprised in the calibration substrate 20 (i.e. the reference markings 22, the substrate orientation markings 24 and the identification marking 26) through the transparent scanning surface 12. Step 206 may comprise storing the scanned calibration pattern, for example in a memory device connected to the processing unit 16. Thanks to the substrate orientation markings 24, the calibration pattern can be scanned and the calibration executable instructions generated even irrespectively of an arrangement of the calibration substrate 20 on the scanning surface 12.

Based on the scanned calibration pattern and on the pattern generation executable instructions that were used for generating the calibration pattern, the processing unit 16 generates calibration executable instructions, which are then sent to a laser processing apparatus 102-1, 102-2, 102-3, 102-4, 102-5 or 102-6 via the connection 110, possibly upon receiving a "proceed with calibration" instruction by a user. The processing unit 16 can know from the identification marking 26 from which one of the laser processing apparatus 102-1, 102-2, 102-3, 102-4, 102-5 or 102-6 the calibration pattern on the calibration substrate 20 originates and correspondingly sends the generated calibration executable instructions to said one of the laser processing apparatus 102-1, 102-2, 102-3, 102-4, 102-5 or 102-6.

Optionally, before the calibration executable instructions are then sent to a laser processing apparatus 102-1, 102-2, 102-3, 102-4, 102-5 or 102-6, the calibration executable instructions which may comprise correction data implementable by the respective control unit of the corresponding one of the laser processing apparatus 102-1, 102-2, 102-3, 102-4, 102-5 or 102-6 to correct/calibrate positional, orientational and/or focussing settings of each of the one or more respective laser processing devices, are displayed to a user of the laser calibration device 10, for example by being represented on a screen. This may for example comprise displaying on a screen a matrix of correction values corresponding to the calibration executable instructions. The user can then check the calibration executable instructions before sending the to the corresponding laser processing apparatus and using them for calibration.

The method 200 can comprise, before step 206, possibly before steps 202 and/or 204, an optional step of performing a basic calibration of the laser calibration device 10 by scanning a basic calibration pattern one or more times and by calibrating the laser calibration device 10 based on the basic calibration pattern. The basic calibration pattern can be formed on a high precision calibration glass substrate, on which a plurality of basic calibration marks are arranged with a positional precision between 1 µm and 2 µm. For increased calibration precision, the basic calibration can be carried out at a constant controlled ambient temperature of for example 20°C. During the basic calibration, the optical detector 14 of the laser calibration device 10 scans the basic calibration pattern. The basic calibration may allow detecting and compensating (calibrating away) possible inaccuracy sources due to inhomogeneities or fluctuations of the properties of the different optical detection units 13 of the optical detector 14.

In step 208, the corresponding laser processing apparatus 102-1, 102-2, 102-3, 102-4, 102-5 or 102-6 uses the corresponding calibration executable instructions provided by the laser processing apparatus 10 for calibrating the respective laser processing devices. This may comprise for example adjusting a focus position, a laser field position, a laser field orientation and/or a laser field size of the one or more laser processing devices of the corresponding laser processing apparatus, possibly by means of corresponding settings of optical and/or electronic components such as lenses, mirrors, galvanometers and the like. Additionally or alternatively, this may also comprise calibrating the laser processing devices of each of the laser processing apparatus is with respect to each other for improved coordination.

The calibration instructions can be based on a difference between the real calibration pattern detected by the optical detector 14 as laser-marked on the calibration substrate 20 and a virtual calibration pattern corresponding to the pattern generation executable instructions that were originally used for generating the calibration pattern. Such difference may for example comprise differences in the positions and/or orientations of the reference markings 22 as compared to virtual reference markings based on the corresponding pattern generation executable instructions.

The steps 202 to 208 can be carried out for each or all of the laser processing apparatuses sequentially. Thus, it is possible to first execute step 202 for all laser processing apparatuses 102-1, ..., 102-6, then step 204 for all laser processing apparatuses 102-1, ..., 102-6, then step 206 for all laser processing apparatuses 102-1, ..., 102-6 and then step 208 for all laser processing apparatuses 102-1, ..., 102-6. However, it is also possible to first execute steps 202 to 208 for laser processing apparatus 102-1, then for laser processing apparatus 102-2, and so on.

Thanks to the invention, it is possible to accurately and reliably calibrate each of the laser processing apparatuses 102-1, ..., 102-6 in a reduced time, for example in 10 minutes or less.

## Claims

1. A laser calibration device (10) comprising:
a scanning surface (12) for arranging thereon a calibration substrate (20) an optical detector (14) for scanning a calibration substrate (20) arranged on the scanning surface (12), wherein the optical detector (14) is movable with respect to the scanning surface (12) with not more than two, preferably not more than one, degree of freedom, wherein the optical detector (14) is movable with respect to the scanning surface (12) in one scanning direction (y) at a separation distance from the scanning surface (12) and/or from a calibration substrate (20) arranged thereon, wherein the separation distance is constant in a direction perpendicular to the scanning surface, wherein the scanning direction (y) is parallel to the scanning surface (12); and
a processing unit (16) functionally connected to the optical detector (14), **characterised in that** the processing unit (16) is configured for:
- generating pattern generation executable instructions which, when executed by a control unit of one or more laser processing devices of a laser processing apparatus (102-1;...; 102-6), cause the one or more laser processing devices to generate a calibration pattern on a calibration substrate (20) using one or more laser beams deflected by the one or more laser processing devices;
- detecting a calibration pattern generated based on the pattern generation executable instructions generated by the processing unit (16), the calibration pattern being comprised in a calibration substrate (20) scanned by the optical detector (14); and
- based on the detected calibration pattern and on the corresponding pattern generation executable instructions, generating calibration executable instructions which, when executed by said control unit of the one or more laser processing devices of said laser processing apparatus (102-1;...; 102-6), calibrate the one or more laser processing devices of said laser processing apparatus (102-1;...; 102-6); and
**in that** the laser calibration device is structurally independent from the laser processing apparatus (102-1;...; 102-6).

2. The device of any of claim 1, wherein the laser calibration device (10) is free of any laser source and/or any laser deflection unit.

3. The device of claim 1 or 2, wherein the optical detector (14) is or comprises a contact image sensor.

4. The device of any of the preceding claims, wherein the optical detector (14) comprises an illuminating device (15) configured for illuminating the scanning surface (12) and/or a calibration substrate (20) arranged on the scanning surface (12).

5. The device of any of the preceding claims, wherein the optical detector (14) is telecentrically configured with respect to the scanning surface (12) and/or to a calibration substrate (20) arranged thereon.

6. The device of any of the preceding claims, wherein the optical detector (14) extends in a detection direction (x) parallel to the scanning surface (12), wherein the detection direction (x) is preferably perpendicular to a scanning direction (y) in which the optical detector (14) is movable, wherein an extension of the optical detector (14) in the detection direction, in particular overlapping the scanning surface (12), preferably is from 100 mm to 1500 mm, more preferably from 300 mm to 1000 mm, particularly preferably from 300 mm to 600 mm, wherein an extension of the optical detector (14) in the detection direction (x) preferably corresponds at least to an extension of the scanning surface (12) in the detection direction (x) or a part thereof.

7. The device according to claim 6, wherein the detection direction (x) corresponds to a direction in which the optical detector (14) is not movable with respect to the scanning surface (12).

8. The device of any of the preceding claims, wherein the constant separation distance between the scanning surface (12) and/or the calibration substrate (20) arranged thereon and the optical detector (14) is from 1 mm to 50 mm, preferably from 5 mm to 25 mm, more preferably from 10 mm to 15 mm.

9. The device of one of the preceding claims, wherein the optical detector (14) has an optical resolution of at least 600 dpi, preferably of at least 1200 dpi, more preferably of at least 2400 dpi.

10. A laser processing system (100) comprising:
one or more laser processing apparatuses (102-1,..., 102-6) comprising one or more respective laser processing devices for laser-processing a work material; and
a laser calibration device according to any of the preceding claims, wherein the processing unit (16) of the laser calibration device is operatively connected to each of the one or more laser processing apparatuses (102-1,..., 102-6) and is configured for:
- generating pattern generation executable instructions such that, when executed by a control unit of the one or more laser processing devices of a given one of the one or more laser processing apparatuses (102-1,..., 102-6), the pattern generation executable instructions cause the one or more laser processing devices of said given one of the one or more laser processing apparatuses (102-1,..., 102-6) to generate a calibration pattern on a calibration substrate (20),
- providing said pattern generation executable instructions to said control unit of the one or more laser processing devices of said given one of the one or more laser processing apparatuses (102-1,..., 102-6);
- detecting the calibration pattern generated by the one or more laser processing devices of said given one of the one or more laser processing apparatuses (102-1,..., 102-6) based on said pattern generation executable instructions, the calibration pattern being comprised in a calibration substrate (20) scanned by the optical detector (14) of the laser calibration device; and
- based on the detected calibration pattern and on said pattern generation executable instructions provided to the control unit of the one or more laser processing devices of said given one of the one or more laser processing apparatuses (102-1,..., 102-6), generating calibration executable instructions which, when executed by the control unit of the one or more laser processing devices of said given one of the one or more laser processing apparatuses (102-1,..., 102-6), calibrate the one or more laser processing devices of said given one of the one or more laser processing apparatuses (102-1,..., 102-6), and
- providing said calibration executable instructions to the control unit of the one or more laser processing devices of said given one of the one or more laser processing apparatuses (102-1,..., 102-6).

11. The system of claim 10, wherein each of the one or more laser processing apparatuses (102-1,..., 102-6) comprises a plurality of laser processing devices configured for laser-processing a work material on a common work field, preferably simultaneously.

12. A method (200) of calibrating one or more laser processing devices of one or more laser processing apparatuses (102-1,..., 102-6) using a laser calibration device (10) according to any of claims 1 to 9, wherein the method comprises:
generating (202), by the laser calibration device (10), pattern generation executable instructions and providing said pattern generation executable instructions to the one or more laser processing devices of each one of the one or more laser processing apparatuses (102-1,..., 102-6),
generating (204), by the one or more laser processing devices of each of the one or more laser processing apparatuses (102-1,..., 102-6), a respective calibration pattern on a corresponding calibration substrate (20) based on the respective pattern generation executable instructions provided by the laser calibration device (10);
for each of the one or more laser processing apparatuses (102-1,..., 102-6), scanning (206) the corresponding calibration pattern using the laser calibration device, and generating calibration executable instructions based on the scanned calibration pattern and on the corresponding pattern generation executable instructions and providing the generated calibration executable instructions to a corresponding one of the one or more laser processing apparatuses (102-1,..., 102-6); and
calibrating (208) the one or more laser processing devices of each of the one or more laser processing apparatuses (102-1,..., 102-6) based on the respective calibration executable instructions received from the laser calibration device.

13. The method of claim 12, wherein generating the pattern generation executable instructions comprises determining a number, a shape, an intensity, a contrast, an orientation and/or a spatial position of a plurality of reference markings (22), wherein the plurality of reference markings (22) preferably comprises a grid of 25 to 2401 reference markings (22);
wherein generating the respective calibration pattern on a corresponding calibration substrate (20) comprises laser-marking the plurality of reference markings (22) on the calibration substrate (20) according to the generated pattern generation executable instructions; and
wherein scanning the corresponding calibration pattern using the laser calibration device (10) comprises scanning the plurality of reference markings (22) and wherein the calibration executable instructions are generated based on the scanned plurality of reference markings (22) and on the corresponding pattern generation executable instructions, preferably based on a difference between a shape, an intensity, a contrast, an orientation and/or a spatial position of the scanned plurality of reference markings (22) as compared to the plurality of reference markings (22) determined according to the pattern generation executable instructions.

14. The method of claim 12 or 13, wherein generating said respective calibration pattern on the corresponding calibration substrate (20) based on the respective pattern generation executable instructions provided by the laser calibration device comprises including in the calibration pattern an identification marking (26) identifying a laser processing apparatus (102-1;...; 102-6) used for generating said respective calibration pattern and/or the respective pattern generation executable instructions used for generating said respective calibration pattern and/or a plurality of substrate orientation markings (24) identifying an orientation of the calibration substrate (20) with respect to the laser processing apparatus (102-1;...; 102-6) used for generating said respective calibration pattern.

15. The method of any of claims 12 to 14, further comprising performing a basic calibration before the step of scanning the corresponding calibration pattern for each of the one or more laser processing apparatuses, wherein the basic calibration comprises scanning a basic calibration pattern one or more times and calibrating the laser calibration device based on the basic calibration pattern.

## Patentansprüche

1. Laserkalibrierungsvorrichtung (10), die Folgendes umfasst:
eine Abtastfläche (12) zum Anordnen eines Kalibrierungssubstrats (20) darauf,
einen optischen Detektor (14) zum Abtasten eines auf der Abtastfläche (12) angeordneten Kalibrierungssubstrats (20), wobei der optische Detektor (14) in Bezug auf die Abtastfläche (12) mit nicht mehr als zwei, vorzugsweise nicht mehr als einem, Freiheitsgrad beweglich ist, wobei der optische Detektor (14) in Bezug auf die Abtastfläche (12) in einer Abtastrichtung (y) bei einem Trennungsabstand zu der Abtastfläche (12) und/oder zu einem darauf angeordneten Kalibrierungssubstrat (20) beweglich ist, wobei der Trennungsabstand in einer Richtung konstant ist, die zur Abtastrichtung (y) senkrecht ist, wobei die Abtastrichtung (y) parallel zur Abtastfläche (12) ist; und
eine Prozessoreinheit (16), die mit dem optischen Detektor (14) funktional verbunden ist, **dadurch gekennzeichnet, dass** die Prozessoreinheit (16) dazu eingerichtet ist:
- Mustererzeugungsanweisungen zu erzeugen, die, bei Ausführung durch eine Steuereinheit einer oder mehrerer Laserbearbeitungsvorrichtungen einer Laserbearbeitungseinrichtung (102-1; ...; 102-6), die eine oder die mehreren Laserbearbeitungsvorrichtungen dazu veranlassen, unter Verwendung eines oder mehrerer Laserstrahlen, die von der einen oder den mehreren Laserbearbeitungsvorrichtungen abgelenkt werden, ein Kalibrierungsmuster auf einem Kalibrierungssubstrat (20) zu erzeugen;
- ein Kalibrierungsmuster zu erfassen, das auf der Grundlage der von der Prozessoreinheit (16) erzeugten Mustererzeugungsanweisungen erzeugt wurde, wobei das Kalibrierungsmuster in einem von dem optischen Detektor (14) abgetasteten Kalibrierungssubstrat (20) enthalten ist; und
- auf der Grundlage des erfassten Kalibrierungsmusters und der entsprechenden Mustererzeugungsanweisungen, Kalibrierungsanweisungen zu erzeugen, die bei Ausführung durch die Steuereinheit der einen oder der mehreren Laserbearbeitungsvorrichtungen der Laserbearbeitungseinrichtung (102-1; ...; 102-6), die eine oder die mehreren Laserbearbeitungsvorrichtungen der Laserbearbeitungseinrichtung (102-1; ...; 102-6) kalibrieren; und
dass die Laserkalibrierungsvorrichtung strukturell unabhängig von der Laserbearbeitungseinrichtung (102-1;...; 102-6) ist.

2. Laserkalibrierungsvorrichtung nach Anspruch 1, wobei die Laserkalibrierungsvorrichtung (10) frei von jeglichen Laserquellen und/oder jeglichen Laserablenkungseinheiten ist.

3. Laserkalibrierungsvorrichtung nach Anspruch 1 oder 2, wobei der optische Detektor (14) ein Kontaktbildsensor ist oder aufweist.

4. Laserkalibrierungsvorrichtung nach einem der vorhergehenden Ansprüche, wobei der optische Detektor (14) eine Beleuchtungsvorrichtung (15) umfasst, die dazu eingerichtet ist, die Abtastfläche (12) und/oder ein auf der Abtastfläche (12) angeordnetes Kalibrierungssubstrat (20) zu beleuchten.

5. Laserkalibrierungsvorrichtung nach einem der vorhergehenden Ansprüche, wobei der optische Detektor (14) in Bezug auf die Abtastfläche (12) und/oder auf ein hierauf angeordnetes Kalibrierungssubstrat (20) telezentrisch konfiguriert ist.

6. Laserkalibrierungsvorrichtung nach einem der vorhergehenden Ansprüche, wobei sich der optische Detektor (14) in einer Erfassungsrichtung (x) parallel zur Abtastfläche (12) erstreckt, wobei die Erfassungsrichtung (x) vorzugsweise senkrecht zu einer Abtastrichtung (y) ist, in der der optische Detektor (14) beweglich ist,
wobei eine Erstreckung des optischen Detektors (14) in der Erfassungsrichtung, insbesondere die Abtastfläche (12) überlappend, vorzugsweise von 100 mm bis 1500 mm, bevorzugter von 300 mm bis 1000 mm, besonders bevorzugt von 300 mm bis 600 mm beträgt,
wobei eine Erstreckung des optischen Detektors (14) in der Erfassungsrichtung (x) vorzugsweise zumindest einer Erstreckung der Abtastfläche (12) in der Erfassungsrichtung (x) oder einem Teil davon entspricht.

7. Laserkalibrierungsvorrichtung nach Anspruch 6, wobei die Erfassungsrichtung (x) einer Richtung entspricht, in der der optische Detektor (14) gegenüber der Abtastfläche (12) nicht beweglich ist.

8. Laserkalibrierungsvorrichtung nach einem der vorhergehenden Ansprüche, wobei der konstante Trennungsabstand zwischen der Abtastfläche (12) und/oder dem darauf angeordneten Kalibrierungssubstrat (20) und dem optischen Detektor (14) von 1 mm bis 50 mm, vorzugsweise von 5 mm bis 25 mm, besonders bevorzugt von 10 mm bis 15 mm beträgt.

9. Laserkalibrierungsvorrichtung nach einem der vorhergehenden Ansprüche, wobei der optische Detektor (14) eine optische Auflösung von mindestens 600 dpi, vorzugsweise von mindestens 1200 dpi, besonders bevorzugt von mindestens 2400 dpi aufweist.

10. Laserbearbeitungssystem (100), das Folgendes umfasst:
eine oder mehrere Laserbearbeitungseinrichtungen (102-1,..., 102-6), die jeweils eine oder mehrere Laserbearbeitungsvorrichtungen zum Laserbearbeiten eines Werkstücks umfassen; und
eine Laserkalibrierungsvorrichtung gemäß einem der vorhergehenden Ansprüche,
wobei die Prozessoreinheit (16) der Laserkalibrierungsvorrichtung operativ mit jeder der einen oder mehreren Laserbearbeitungseinrichtungen (102-1, ..., 102-6) verbunden ist und dazu eingerichtet ist:
- Mustererzeugungsanweisungen zu erzeugen, die bei Ausführung durch eine Steuereinheit der einen oder mehreren Laserbearbeitungsvorrichtungen einer gegebenen Laserbearbeitungseinrichtung der einen oder mehreren Laserbearbeitungseinrichtungen (102-1, ..., 102-6), die eine oder mehreren Laserbearbeitungsvorrichtungen der gegebenen Laserbearbeitungseinrichtung der einen oder mehreren Laserbearbeitungseinrichtungen (102-1, ..., 102-6) dazu veranlassen, ein Kalibrierungsmuster auf einem Kalibrierungssubstrat (20) zu erzeugen,
- der Steuereinheit der einen oder mehreren Laserbearbeitungsvorrichtungen der gegebenen Laserbearbeitungseinrichtung der einen oder mehreren Laserbearbeitungseinrichtungen (102-1, ..., 102-6) die Mustererzeugungsanweisungen bereitzustellen;
- das Kalibrierungsmuster zu erfassen, das von der einen oder den mehreren Laserbearbeitungsvorrichtungen der gegebenen Laserbearbeitungseinrichtung der einen oder mehreren Laserbearbeitungseinrichtungen (102-1, ..., 102-6) auf der Grundlage der Mustererzeugungsanweisungen erzeugt wurde, wobei das Kalibrierungsmuster in einem Kalibrierungssubstrat (20) enthalten ist, das von dem optischen Detektor (14) der Laserkalibrierungsvorrichtung abgetastet wird; und
- basierend auf dem erfassten Kalibrierungsmuster und auf den Mustererzeugungsanweisungen, die der Steuereinheit der einen oder mehreren Laserbearbeitungsvorrichtungen der gegebenen Laserbearbeitungseinrichtung der einen der einen oder mehreren Laserbearbeitungseinrichtungen (102-1,... (102-1, ..., 102-6) bereitgestellt wurden, Kalibrierungsanweisungen zu erzeugen, die bei Ausführung durch die Steuereinheit der einen oder mehreren Laserbearbeitungsvorrichtungen der gegebenen Laserbearbeitungseinrichtung der einen oder mehreren Laserbearbeitungseinrichtungen (102-1, ..., 102-6) die eine oder mehreren Laserbearbeitungsvorrichtungen der gegebenen Laserbearbeitungseinrichtung der einen oder mehreren Laserbearbeitungseinrichtungen (102-1, ..., 102-6) kalibrieren, und
- der Steuereinheit der einen oder mehreren Laserbearbeitungsvorrichtungen der gegebenen Laserbearbeitungseinrichtung der einen oder mehreren Laserbearbeitungseinrichtungen (102-1, ..., 102-6) die Kalibrierungsanweisungen bereitzustellen.

11. Laserbearbeitungssystem nach Anspruch 10, wobei jede der einen oder mehreren Laserbearbeitungseinrichtungen (102-1, ..., 102-6) eine Vielzahl von Laserbearbeitungsvorrichtungen umfasst, die dazu eingerichtet sind, ein Arbeitsmaterial auf einem gemeinsamen Arbeitsfeld, vorzugsweise gleichzeitig, mit Laser zu bearbeiten.

12. Verfahren (200) zum Kalibrieren einer oder mehrerer Laserbearbeitungsvorrichtungen einer oder mehrerer Laserbearbeitungseinrichtungen (102-1, ..., 102-6) unter Verwendung einer Laserkalibrierungsvorrichtung (10) gemäß einem der Ansprüche 1 bis 9, wobei das Verfahren Folgendes umfasst:
Erzeugen (202), durch die Laserkalibrierungsvorrichtung (10), von Mustererzeugungsanweisungen, und Weitergeben der Mustererzeugungsanweisungen an die eine oder die mehreren Laserbearbeitungsvorrichtungen jeder der einen oder mehreren Laserbearbeitungseinrichtungen (102-1, ..., 102-6),
Erzeugen (204) durch die eine oder die mehreren Laserbearbeitungsvorrichtungen jeder der einen oder mehreren Laserbearbeitungseinrichtungen (102-1, ..., 102-6) eines jeweiligen Kalibrierungsmusters auf einem entsprechenden Kalibrierungssubstrat (20) auf der Grundlage der jeweiligen von der Laserkalibrierungsvorrichtung (10) bereitgestellten Mustererzeugungsanweisungen;
für jede der einen oder mehreren Laserbearbeitungseinrichtungen (102-1, ..., 102-6), Abtasten (206) des entsprechenden Kalibrierungsmusters unter Verwendung der Laserkalibrierungsvorrichtung und Erzeugen von Kalibrierungsanweisungen auf der Grundlage des abgetasteten Kalibrierungsmusters und der entsprechenden Mustererzeugungsanweisungen, und Weitergeben der erzeugten Kalibrierungsanweisungen an eine entsprechende Laserbearbeitungseinrichtung der einen oder mehreren Laserbearbeitungseinrichtungen (102-1, ..., 102-6); und
Kalibrieren (208) der einen oder mehreren Laserbearbeitungsvorrichtungen jeder der einen oder mehreren Laserbearbeitungseinrichtungen (102-1, ..., 102-6) auf der Grundlage der jeweiligen aus der Laserkalibrierungsvorrichtung empfangenen Kalibrierungsanweisungen.

13. Verfahren nach Anspruch 12, wobei das Erzeugen der Mustererzeugungsanweisungen das Bestimmen einer Anzahl, einer Form, einer Intensität, eines Kontrasts, einer Orientierung und/oder einer räumlichen Position einer Vielzahl von Referenzmarkierungen (22) umfasst, wobei die Vielzahl von Referenzmarkierungen (22) vorzugsweise ein Gitter von 25 bis 2401 Referenzmarkierungen (22) umfasst; wobei das Erzeugen des jeweiligen Kalibrierungsmusters auf einem entsprechenden Kalibrierungssubstrat (20) das Lasermarkieren der Vielzahl von Referenzmarkierungen (22) auf dem Kalibrierungssubstrat (20) gemäß den erzeugten Mustererzeugungsanweisungen umfasst; und
wobei das Abtasten des entsprechenden Kalibrierungsmusters unter Verwendung der Laserkalibrierungsvorrichtung (10) das Abtasten der Vielzahl von Referenzmarkierungen (22) umfasst und wobei die Kalibrierungsanweisungen auf der Grundlage der abgetasteten Vielzahl von Referenzmarkierungen (22) und der entsprechenden Mustererzeugungsanweisungen erzeugt werden, vorzugsweise auf der Grundlage einer Differenz zwischen einer Form, einer Intensität, einem Kontrast, einer Ausrichtung und/oder einer räumlichen Position der abgetasteten Vielzahl von Referenzmarkierungen (22) im Vergleich zu der Vielzahl von Referenzmarkierungen (22), die gemäß den Mustererzeugungsanweisungen bestimmt wurden.

14. Verfahren nach Anspruch 12 oder 13, wobei das Erzeugen des jeweiligen Kalibrierungsmusters auf dem entsprechenden Kalibrierungssubstrat (20) auf der Grundlage der jeweiligen von der Laserkalibrierungsvorrichtung bereitgestellten Mustererzeugungsanweisungen Folgendes umfasst: Einbringen einer Identifikationsmarkierung (26) in das Kalibrierungsmuster, die eine Laserbearbeitungseinrichtung (102-1; ...; 102-6) identifiziert, die zum Erzeugen des jeweiligen Kalibrierungsmusters verwendet wurde, und/oder die jeweiligen Mustererzeugungsanweisungen identifiziert, die zum Erzeugen des jeweiligen Kalibrierungsmusters verwendet wurden; und/oder
einer Vielzahl von Substratausrichtungsmarkierungen (24), die eine Ausrichtung des Kalibrierungssubstrats (20) in Bezug auf die Laserbearbeitungseinrichtung (102-1; ...; 102-6) identifizieren, die zum Erzeugen des jeweiligen Kalibrierungsmusters verwendet wurde.

15. Verfahren nach einem der Ansprüche 12 bis 14, das ferner das Durchführen einer Grundkalibrierung vor dem Schritt des Abtastens des entsprechenden Kalibrierungsmusters für jede der einen oder mehreren Laserbearbeitungseinrichtungen umfasst, wobei die Basiskalibrierung das ein- oder mehrmalige Abtasten eines Basiskalibrierungsmusters und das Kalibrieren der Laserkalibrierungsvorrichtung basierend auf dem Basiskalibrierungsmuster umfasst.

## Revendications

1. Dispositif d'étalonnage laser (10) comprenant :
une surface de balayage (12) pour agencer sur celle-ci un substrat d'étalonnage (20) ;
un détecteur optique (14) pour balayer un substrat d'étalonnage (20) agencé sur la surface de balayage (12), dans lequel le détecteur optique (14) est mobile par rapport à la surface de balayage (12) avec pas plus de deux, de préférence pas plus d'un degré de liberté, dans lequel le détecteur optique (14) est mobile par rapport à la surface de balayage (12) dans une direction de balayage (y) à une distance de séparation de la surface de balayage (12) et/ou d'un substrat d'étalonnage (20) agencé sur celle-ci, dans lequel la distance de séparation est constante dans une direction perpendiculaire à la surface de balayage, dans lequel la direction de balayage (y) est parallèle à la surface de balayage (12) ; et
une unité de traitement (16) connectée fonctionnellement au détecteur optique (14), **caractérisé en ce que** l'unité de traitement (16) est configurée pour :
- générer des instructions exécutables de génération de motif qui, lorsqu'elles sont exécutées par une unité de commande d'un ou plusieurs dispositifs de traitement laser d'un appareil de traitement laser (102-1 ; ... ; 102-6), amènent les un ou plusieurs dispositifs de traitement laser à générer un motif d'étalonnage sur un substrat d'étalonnage (20) en utilisant un ou plusieurs faisceaux laser déviés par les un ou plusieurs dispositifs de traitement laser ;
- détecter un motif d'étalonnage généré sur la base des instructions exécutables de génération de motif générées par l'unité de traitement (16), le motif d'étalonnage étant compris dans un substrat d'étalonnage (20) balayé par le détecteur optique (14); et
- sur la base du motif d'étalonnage détecté et des instructions exécutables de génération de motif correspondantes, générer des instructions exécutables d'étalonnage qui, lorsqu'elles sont exécutées par ladite unité de commande des un ou plusieurs dispositifs de traitement laser dudit appareil de traitement laser (102-1 ; ...; 102-6), étalonnent les un ou plusieurs dispositifs de traitement laser dudit appareil de traitement laser (102-1 ; ... ; 102-6) ; et
**en ce que** le dispositif d'étalonnage laser est structurellement indépendant de l'appareil de traitement laser (102-1 ; ... ; 102-6).

2. Dispositif selon la revendication 1, dans lequel le dispositif d'étalonnage laser (10) est exempt de toute source laser et/ou de toute unité de déviation laser.

3. Dispositif selon la revendication 1 ou 2, dans lequel le détecteur optique (14) est ou comprend un capteur d'image de contact.

4. Dispositif selon l'une quelconque des revendications précédentes, dans lequel le détecteur optique (14) comprend un dispositif d'éclairage (15) configuré pour éclairer la surface de balayage (12) et/ou un substrat d'étalonnage (20) agencé sur la surface de balayage (12).

5. Dispositif selon l'une quelconque des revendications précédentes, dans lequel le détecteur optique (14) est configuré de manière télécentrique par rapport à la surface de balayage (12) et/ou à un substrat d'étalonnage (20) agencé sur celle-ci.

6. Dispositif selon l'une quelconque des revendications précédentes, dans lequel le détecteur optique (14) s'étend dans une direction de détection (x) parallèle à la surface de balayage (12), dans lequel la direction de détection (x) est de préférence perpendiculaire à une direction de balayage (y) dans laquelle le détecteur optique (14) est mobile, dans lequel une extension du détecteur optique (14) dans la direction de détection, en particulier chevauchant la surface de balayage (12), est de préférence de 100 mm à 1500 mm, plus préférablement de 300 mm à 1000 mm, particulièrement préférablement de 300 mm à 600 mm, dans lequel une extension du détecteur optique (14) dans la direction de détection (x) correspond de préférence au moins à une extension de la surface de balayage (12) dans la direction de détection (x) ou une partie de celle-ci.

7. Dispositif selon la revendication 6, dans lequel la direction de détection (x) correspond à une direction dans laquelle le détecteur optique (14) n'est pas mobile par rapport à la surface de balayage (12).

8. Dispositif selon l'une quelconque des revendications précédentes, dans lequel la distance de séparation constante entre la surface de balayage (12) et/ou le substrat d'étalonnage (20) agencé sur celle-ci et le détecteur optique (14) est de 1 mm à 50 mm, de préférence de 5 mm à 25 mm, plus préférablement de 10 mm à 15 mm.

9. Dispositif selon l'une des revendications précédentes, dans lequel le détecteur optique (14) a une résolution optique d'au moins 600 dpi, de préférence d'au moins 1200 dpi, plus préférablement d'au moins 2400 dpi.

10. Système de traitement laser (100) comprenant :
un ou plusieurs appareils de traitement laser (102-1, ..., 102-6) comprenant un ou plusieurs dispositifs de traitement laser respectifs pour le traitement laser d'un matériau de travail ; et
un dispositif d'étalonnage laser selon l'une quelconque des revendications précédentes, dans lequel l'unité de traitement (16) du dispositif d'étalonnage laser est connectée fonctionnellement à chacun des un ou plusieurs appareils de traitement laser (102-1, ..., 102-6) et est configurée pour :
- générer des instructions exécutables de génération de motif de sorte que, lorsqu'elles sont exécutées par une unité de commande des un ou plusieurs dispositifs de traitement laser d'un appareil donné des un ou plusieurs appareils de traitement laser (102-1, ..., 102-6), les instructions exécutables de génération de motif amènent les un ou plusieurs dispositifs de traitement laser dudit appareil donné des un ou plusieurs appareils de traitement laser (102-1, ..., 102-6) à générer un motif d'étalonnage sur un substrat d'étalonnage (20),
- fournir lesdites instructions exécutables de génération de motif à ladite unité de commande des un ou plusieurs dispositifs de traitement laser dudit appareil donné des un ou plusieurs appareils de traitement laser (102-1, ..., 102-6) ;
- détecter le motif d'étalonnage généré par les un ou plusieurs dispositifs de traitement laser dudit appareil donné des un ou plusieurs appareils de traitement laser (102-1, ..., 102-6) sur la base desdites instructions exécutables de génération de motif, le motif d'étalonnage étant compris dans un substrat d'étalonnage (20) balayé par le détecteur optique (14) du dispositif d'étalonnage laser ; et
- sur la base du motif d'étalonnage détecté et desdites instructions exécutables de génération de motif fournies à l'unité de commande des un ou plusieurs dispositifs de traitement laser dudit appareil donné des un ou plusieurs appareils de traitement laser (102-1, ..., 102-6), générer des instructions exécutables d'étalonnage qui, lorsqu'elles sont exécutées par l'unité de commande des un ou plusieurs dispositifs de traitement laser dudit appareil donné des un ou plusieurs appareils de traitement laser (102-1, ..., 102-6), étalonnent les un ou plusieurs dispositifs de traitement laser dudit appareil donné des un ou plusieurs appareils de traitement laser (102-1, ..., 102-6), et
- fournir lesdites instructions exécutables d'étalonnage à l'unité de commande des un ou plusieurs dispositifs de traitement laser dudit appareil donné des un ou plusieurs appareils de traitement laser (102-1, ..., 102-6).

11. Système selon la revendication 10, dans lequel chacun des un ou plusieurs appareils de traitement laser (102-1, ..., 102-6) comprend une pluralité de dispositifs de traitement laser configurés pour le traitement laser d'un matériau de travail sur un champ de travail commun, de préférence simultanément.

12. Procédé (200) d'étalonnage d'un ou plusieurs dispositifs de traitement laser d'un ou plusieurs appareils de traitement laser (102-1, ..., 102-6) en utilisant un dispositif d'étalonnage laser (10) selon l'une quelconque des revendications 1 à 9, dans lequel le procédé comprend :
la génération (202), par le dispositif d'étalonnage laser (10), d'instructions exécutables de génération de motif et la fourniture desdites instructions exécutables de génération de motif aux un ou plusieurs dispositifs de traitement laser de chacun des un ou plusieurs appareils de traitement laser (102-1, ..., 102-6),
la génération (204), par les un ou plusieurs dispositifs de traitement laser de chacun des un ou plusieurs appareils de traitement laser (102-1, ..., 102-6), d'un motif d'étalonnage respectif sur un substrat d'étalonnage correspondant (20) sur la base des instructions exécutables de génération de motif respectives fournies par le dispositif d'étalonnage laser (10) ;
pour chacun des un ou plusieurs appareils de traitement laser (102-1, ..., 102-6), le balayage (206) du motif d'étalonnage correspondant en utilisant le dispositif d'étalonnage laser, et la génération d'instructions exécutables d'étalonnage sur la base du motif d'étalonnage balayé et des instructions exécutables de génération de motif correspondantes et la fourniture des instructions exécutables d'étalonnage générées à un appareil correspondant des un ou plusieurs appareils de traitement laser (102-1, ..., 102-6) ; et
l'étalonnage (208) des un ou plusieurs dispositifs de traitement laser de chacun des un ou plusieurs appareils de traitement laser (102-1, ..., 102-6) sur la base des instructions exécutables d'étalonnage respectives reçues du dispositif d'étalonnage laser.

13. Procédé selon la revendication 12, dans lequel la génération des instructions exécutables de génération de motif comprend la détermination d'un nombre, d'une forme, d'une intensité, d'un contraste, d'une orientation et/ou d'une position spatiale d'une pluralité de marquages de référence (22), dans lequel la pluralité de marquages de référence (22) comprend de préférence une grille de 25 à 2401 marquages de référence (22) ;
dans lequel la génération du motif d'étalonnage respectif sur un substrat d'étalonnage correspondant (20) comprend le marquage laser de la pluralité de marquages de référence (22) sur le substrat d'étalonnage (20) selon les instructions exécutables de génération de motif générées ; et
dans lequel le balayage du motif d'étalonnage correspondant en utilisant le dispositif d'étalonnage laser (10) comprend le balayage de la pluralité de marquages de référence (22) et dans lequel les instructions exécutables d'étalonnage sont générées sur la base de la pluralité balayée de marquages de référence (22) et des instructions exécutables de génération de motif correspondantes, de préférence sur la base d'une différence entre une forme, une intensité, un contraste, une orientation et/ou une position spatiale de la pluralité balayée de marquages de référence (22) par rapport à la pluralité de marquages de référence (22) déterminés selon les instructions exécutables de génération de motif.

14. Procédé selon la revendication 12 ou 13, dans lequel la génération dudit motif d'étalonnage respectif sur le substrat d'étalonnage correspondant (20) sur la base des instructions exécutables de génération de motif respectives fournies par le dispositif d'étalonnage laser comprend l'inclusion dans le motif d'étalonnage d'un marquage d'identification (26) identifiant un appareil de traitement laser (102-1 ; ... ; 102-6) utilisé pour générer ledit motif d'étalonnage respectif et/ou les instructions exécutables de génération de motif respectives utilisées pour générer ledit motif d'étalonnage respectif et/ou une pluralité de marquages d'orientation de substrat (24) identifiant une orientation du substrat d'étalonnage (20) par rapport à l'appareil de traitement laser (102-1 ; ... ; 102-6) utilisé pour générer ledit motif d'étalonnage respectif.

15. Procédé selon l'une quelconque des revendications 12 à 14, comprenant en outre la réalisation d'un étalonnage de base avant l'étape de balayage du motif d'étalonnage correspondant pour chacun des un ou plusieurs appareils de traitement laser, dans lequel l'étalonnage de base comprend le balayage d'un motif d'étalonnage de base une ou plusieurs fois et l'étalonnage du dispositif d'étalonnage laser sur la base du motif d'étalonnage de base.
